# EUROPEAN PATENT APPLICATION

(11) **EP 4 254 251 A1**
(43) Date of publication of application: **04.10.2023**
(21) Application number: 22166376.8
(22) Date of filing: 01.04.2022
(51) Int. Cl.: G06F 30/17, G06F 30/15, G06F 111/04, G06F 111/06

(54) **VEHICLE DESIGN TOOL**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A computer-implemented method of generating one or more designs for a vehicle, using a vehicle modelling application arranged to generate a three-dimensional model of a vehicle from a vehicle model definition, the vehicle model definition defining a set of values for geometric properties of the vehicle. A set of vehicle model definitions is generated, each vehicle model definition satisfying a set of geometric constraints. The set of vehicle model definitions is then filtered by generating the three-dimensional model of a vehicle from a vehicle model definition using the vehicle modelling application, determining whether the three-dimensional model satisfies a first set of physical constraints, and if the three-dimensional model does not satisfy the set of physical constraints, removing the vehicle model definition from the set of vehicle model definitions.

## Description

### Field of the Invention

The present invention concerns generating designs for vehicles. More particularly, but not exclusively, the invention concerns computer-implemented methods of generating one or more designs for a vehicle, and computer program products arranged to perform such methods.

### Background of the Invention

Designs for vehicles, such as aircraft, are usually created by a manual process. Potential designs will created by a user, for example using CAD software, based for example on previous designs known to the user. Where a user wants to design a vehicle with particular properties, such as particular aerodynamic properties, the user will attempt to provide one or more vehicle designs satisfying those properties using their judgement or intuition. Once the vehicle designs have been created, various analysis tools can be used on the vehicle designs, for example see whether they satisfies the required aerodynamic requirements. However, such analysis tools often require considerable processing power, and so can only be viably used on a small number of potential vehicle designs.

As a consequence, such the design process can be very time consuming. In addition, potentially suitable vehicle designs may never be considered, as it is not viable for a user to create every possible vehicle design that could potentially satisfy their requirements.

The present invention seeks to mitigate the above-mentioned problems. Alternatively or additionally, the present invention seeks to provide improved methods of generating designs for vehicles.

### Summary of the Invention

In accordance with an embodiment of the invention there is provided a computer-implemented method of generating one or more designs for a vehicle, using a vehicle modelling application arranged to generate a three-dimensional model of a vehicle from a vehicle model definition, the vehicle model definition defining a set of values for geometric properties of the vehicle, the method comprising the steps of:
receiving a set of geometric constraints, each geometric constraint defining a set of permissible values for a geometric property of the vehicle;
receiving a first set of physical constraints for the vehicle, each physical constraint defining a set of permissible values for a physical property of the vehicle;
generating a set of vehicle model definitions, wherein each vehicle model definition of the set of vehicle model definitions satisfies each geometric constraint of the set of geometric constraints;
filtering the set of vehicle model definitions using the first set of physical constraints by:
   for one or more vehicle model definitions of the set of vehicle model definitions, generating a three-dimensional model of the vehicle from the vehicle model definition using the vehicle modelling application;
   determining whether the three-dimensional model satisfies each physical constraint of the first set of physical constraints;
   if the three-dimensional model does not satisfy each physical constraint of the first set of physical constraints, removing the vehicle model definition from the set of vehicle model definitions; and
outputting the filtered set of vehicle model definitions.

By using a set of geometrical constraints, a very large number of potential vehicle designs can be generated, rather than a small number of designs being created manually by a user. This helps to avoid any potentially desirable designs never being considered. However, by also receiving a set of physical constraints and using those to filter the generated vehicle designs, the number of vehicle designs can also be reduced considerably in an automated manner, so that any clearly non-viable designs can be omitted, and the number of designs that remain to be considered by the user is not unmanageable. Where the processing power required to determine if each physical constraint is satisfied is small, the filtered set of vehicle designs can be quickly generated, with the user then performing any further analysis of the vehicle designs they desire, including analyses that requires greater processing power, so could not viably be performed on the larger set of vehicle designs that is initially generated. In addition, the use of vehicle modelling application, rather than a general CAD program for example, means that each vehicle model definition can be small in size, as it only needs to store the information required by the vehicle modelling application to general the vehicle model, and not the complete information about every surface and the like of the vehicle, as would be required by a general CAD program or the like.

The one or more designs may be designs of part of the vehicle, or of the entire vehicle.

The geometric property of a geometric constraint of the set of geometric constraints may include the angle of a part of the vehicle. The geometric property of a geometric constraint of the set of geometric constraints includes the length of a part of the vehicle. One or more geometric constraints may be provided as a component that needs to be included in the vehicle designs. Such a component may be entirely defined, i.e. a fixed value is given for every geometric property of the component. Alternatively, a component may only be partially defined, i.e. a set of permissible values is given for some or all of the geometric properties of the component. A set of permissible values may be defined by means of a list of permissible values, or a range, for example.

The physical property of a physical constraint of the first set of physical constraints may include the area of a part of the vehicle body. The first set of physical may not include any aerodynamic constraints, which tend to require a large amount of processing power to be determined.

The generated set of vehicle model definitions may consist of all vehicle model definitions that satisfy each geometric constraint of the set of geometric constraints.

The vehicle modelling application is OpenVSP. OpenVSP advantageously allows an aircraft model to be defined using only a small amount of required information, and can store such definitions in files of a correspondingly small size. However, other vehicle modelling applications may be used.

The method may further comprise the steps of:
subsequent to filtering the set of vehicle model definitions using the first set of physical constraints, filtering the set of vehicle model definitions using user input by:
for one or more vehicle model definitions of the set of vehicle model definitions, displaying the three-dimensional model of the vehicle of the vehicle model definition to a user;
in response to a request from the user, removing the vehicle model definition from the set of vehicle model definitions.

The user may request to remove single vehicle model definitions, or sets of vehicle model definitions, for example all those with particular geometric or physical properties. The request to remove one or more vehicle model definitions may be implicit, for example the user may indicate which vehicle model definitions they wish to keep, with the others being removed.

The method may further comprise the steps of:
receiving a second set of physical constraints for the vehicle, each physical constraint defining a set of permissible values for physical property of the vehicle;
subsequent to filtering the set of vehicle model definitions using the first set of physical constraints, filtering the set of vehicle model definitions using the second set of physical constraints by:
   for one or more vehicle model definitions of the set of vehicle model definitions, determining whether the three-dimensional model of the vehicle of the vehicle model definition satisfies each physical constraint of the second set of physical constraints;
   if the three-dimensional model does not satisfy each physical constraint of the second set of physical constraints, removing the vehicle model definition from the set of vehicle model definitions.

This allows the number of vehicle designs to be filtered by the second set of physical constraints as well as the first set of physical constraints, but with the second set of physical constraints being used after the number of vehicle designs has been reduced using the first set of physical constraints (and potentially by the user as well). This means that physical constraints can be included in the second set of physical constraints that require a greater amount of processing power than would be viable for a physical constraint of the first set of physical constraints, as the second set of physical constraints will only be determined for a much smaller number of vehicle designs. These filtering using the second set of physical constraints may occur before or after any filtering by the user.

The method may further comprise the steps of:
subsequent to filtering the set of vehicle model definitions using the second set of physical constraints, filtering the set of vehicle model definitions using further user input by:
for one or more vehicle model definitions of the set of vehicle model definitions, displaying the three-dimensional model of the vehicle of the vehicle model definition to a user;
in response to a request from the user, removing the vehicle model definition from the set of vehicle model definitions. Thus, following the filtering of the vehicle designs by the second set of physical constraints, the user may again manually remove one or more vehicle designs.

The second set of physical constraints may comprise aerodynamic constraints, each aerodynamic constraint defining a set of permissible values for an aerodynamic property of the vehicle. Aerodynamic constraints generally require a greater amount of processing power to be determined. All the physical constraints of the second set of physical constraints may be aerodynamic constraints. However, the second set of physical constraints may include physical constraints other than aerodynamic constraints that require a greater amount of processing power to be determined. The first set of physical constraints may not include any aerodynamic constraints.

Each physical constraint of the second set of physical constraints may require greater processing power than each physical constraint of the first set of physical constraints.

The vehicle may be an aircraft. The vehicle may be an automobile, for example a racing car. The vehicle may be a water vessel, for example a catamaran.

The method may further comprise the step of manufacturing a vehicle in accordance with a vehicle model definition of the set of vehicle model definitions.

According to another aspect of the invention, there is provided a computer program product comprising instructions which, when executed on a computing device comprising a processor and memory, cause the processor to carry out the method as described above.

There may be provided a non-transitory machine-readable storage medium comprising instructions which, when executed by a processor, cause the processor to carry out the method as described above.

It will of course be appreciated that features described in relation to one aspect of the present invention may be incorporated into other aspects of the present invention. It will also be appreciated that the steps of the methods may be performed in different orders while remaining in accordance with the invention.

### Description of the Drawings

Embodiments of the present invention will now be described by way of example only with reference to the accompanying schematic drawings of which:
Figure 1 is a schematic diagram of a software application system in accordance an embodiment of the invention;
Figure 2 is a flowchart of a method of generating designs for an aircraft in accordance with an embodiment of the invention;
Figure 3 is a visual representation of an example variable component used in the method of Figure 2;
Figure 4a is a schematic representation of a generated set of aircraft designs, generated using the method of Figure 2;
Figure 4b to 4c are schematic representations of filtered sets of aircraft designs, generated using the method of Figure 2; and
Figure 5 is a schematic diagram of a computing device in accordance an embodiment of the invention.

### Detailed Description

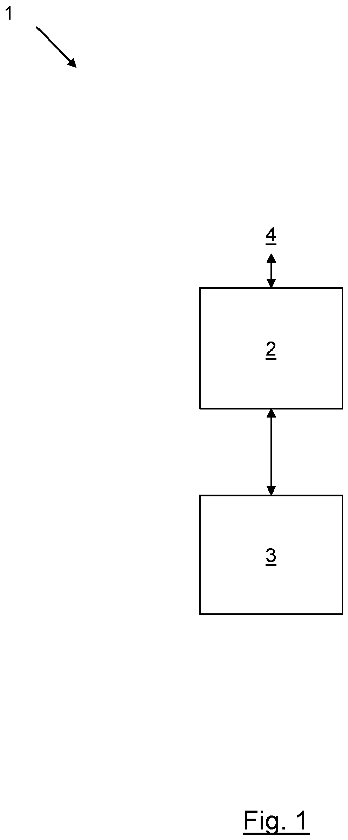

A software application system in accordance with an embodiment of the invention is now described with reference to Figure 1. The software application system 1 comprises a control application 2. In the present embodiment the control application 2 is Mathworks^{™} Matlab^{™}. It will be appreciated that in other embodiments other suitable applications could be used. As well as controlling the operation of the software application system 1 in accordance with the embodiment, the control application 2 can display output to, and receive input from, a user 4.

The control application 2 is in communication with a vehicle modelling application 3. In the present embodiment the vehicle modelling application 3 is OpenVSP^{™}. OpenVSP^{™} is an open-source parametric aircraft geometry tool, which can be used to generate a three-dimensional model of an aircraft based upon common aircraft engineering parameters. It will be appreciated that in other embodiments other suitable applications could be used, including other applications that model aircraft, and applications that model other types of vehicle, such as automobiles or water vessels.

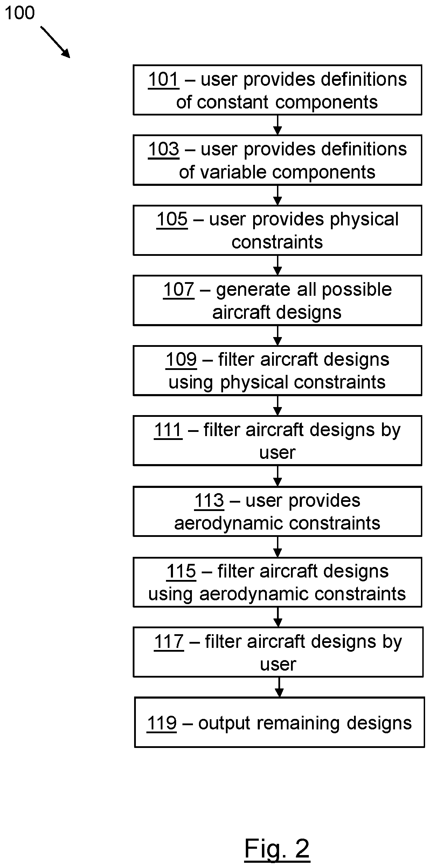

A method of generating one or more designs for a vehicle in accordance with an embodiment of the invention is now described with reference to Figures 2 to 4e. The method uses the software application system 100 of Figure 1, and in the present embodiment the method is used to generate one or more designs for an aircraft. The overall operation of the method, including any communication with the user 4, is performed by the control application 2.

In a first step (step 101), the user 4 provides one or more definitions of fixed components for the aircraft to the control application 2. The fixed components are components of the aircraft that must be present in every generated aircraft design, and the geometrical properties of which are entirely defined, in other words the dimensions and angles of the component are all given fixed values. For example, the user 10 may provide a definition for the fuselage of the aircraft, so that every aircraft design is required to have that fuselage. The user 10 may provide definitions of other fixed components, for example the tail fins for the aircraft. The definition of each fixed component is provided as one or more .vsp3 files, the format used by openVSP, i.e. the vehicle modelling application 3. The fixed components may have been designed in openVSP, which may have been done as part of the process of generating the aircraft designs, or the files may have been obtained from a store of pre-existing files.

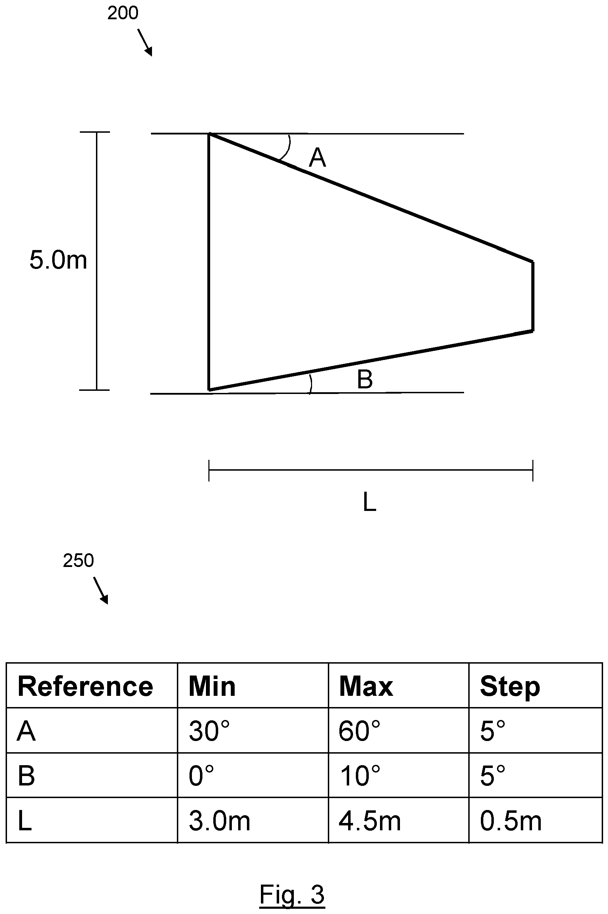

Next (step 103), the user 4 provides one or more definitions of variable components for the aircraft. These define components of the aircraft for which some of the geometrical properties can vary. A schematic representation of an example variable component is shown in Figure 3.

Figure 3 shows a wing of the aircraft represented by a wing planform 200. As can be seen, the wing planform 200 has a fixed width on the side it will connects to the aircraft fuselage of 5.0m. However, the length of the wing planform 200 is given by a parameter L. Similarly, the leading edge sweep angle of the wing planform 200 is given by a parameter A, and the trailing edge sweep angle of the wing planform 200 is given by a parameter B.

Figure 3 also shows a table 250 indicating the possible values for parameters A, B and L. These possible values are provided by the user 4 as input when defining the variable component. The possible values are defined by means of a minimum value, a maximum value, and a step amount. Thus, the parameter A, i.e. the leading edge sweep angle of the wing planform 200, is defined as having a minimum value of 30° and a maximum value of 60°, and a step amount of 5°, so that the possible values for the parameter A are 30°, 35°, 40°, 45°, 50°, 55° or 60°. Similarly, the parameter B, i.e. the trailing edge sweep angle of the wing planform 200, is defined as having a minimum value of 0° and a maximum value of 10°, and a step amount again of 5°, so that the possible values for the parameter B are 0°, 5° and 10°. Finally, the parameter L, i.e. the length of the wing planform 200, is defined as having a minimum value of 3.0m and a maximum value of 4.5m, and a step amount of 0.5m, so that the possible values for the parameter L are 3.0m, 3.5m, 4.0m and 4.5m.

The definition of each variable component is again provided as one or more .vsp3 files, but modified to be able to indicate that a geometric property can be in a particular range, rather than being a single fixed value. In some embodiments, the .vsp3 file may indicate the end points of the range and the step value. In other embodiments, the .vps3 file may separately indicate each possible value for the geometric property.

Next (step 105), the user 4 provides one or more physical constraints for the aircraft. The physical constraints are physical properties that the designed aircraft must satisfy. For example, a physical constraint may be that the exposed area of a wing of the aircraft is less than a particular area, for example less than 15m².

Next (step 107), a set of all aircraft designs that satisfy the fixed components and variable components is generated. In particular, the control application 2 generates each possible .vsp3 file that defines an aircraft having components corresponding to each of the fixed components, and components corresponding to the variable components with possible values for their parameters. For example, where in the example above the leading edge sweep angle of the wing planform 200 can have seven possible angles, for each of those possible angles a .vps3 file will be generated. This is done for each possible parameter of each variable component, so as to generate a .vps3 file for each possible combination. For example, if the example variable component above were the only variable component, with the rest of the aircraft design being defined by fixed components, as the variable component allows seven possible angles for the leading edge sweep angle, three possible angles for the trailing edge sweep angle, and four possible angles for the wing length, this would lead to 84 (7 times 3 times 4) .vps3 files being generated, one for each possible combination.

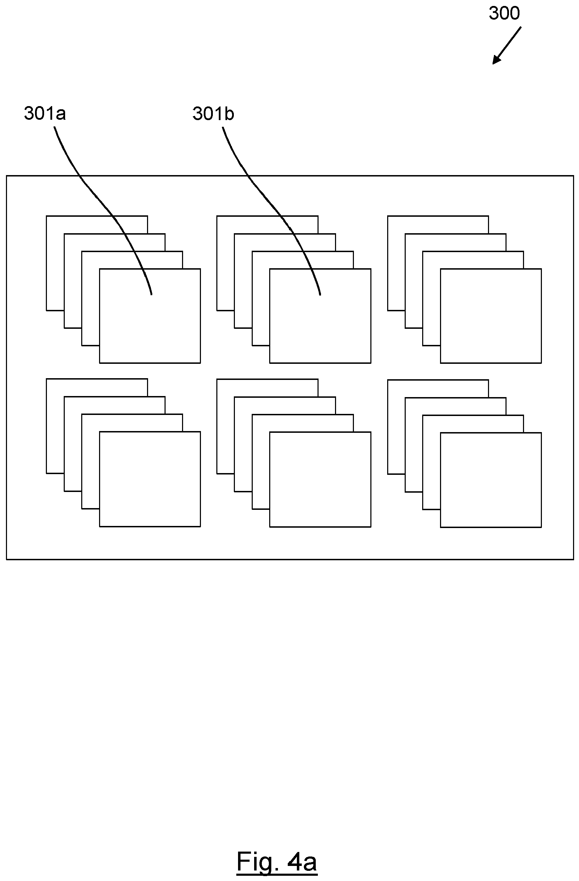

The generated set of aircraft designs 300 is shown schematically in Figure 4a. As can be seen, the generated set of aircraft designs 300 comprises various subsets 301a, 301b and so on of aircraft designs, corresponding to the different possible values for the different parameters of the variable components.

It will be appreciated that where there are a number of parameters for variable components defining a number of possible values, the number of .vps3 files generated may be very large due to the exponential effect of the different possible combinations. As a .vps3 file is a set of instructions for generating an aircraft design based on standard design parameters, rather than for example a CAD file in which every surface of the aircraft is defined, the .vps3 can be very quickly and efficiently generated and are very small in size in comparison to a CAD file.

Thus, while in the present example a set of 24 designs is shown, it will be appreciated that in practice the generated set of aircraft designs may comprise hundreds, thousands or tens of thousands of aircraft designs, with a corresponding number of .vps3 files. Similarly, it will be appreciated that where below it is described that the number of aircraft designs is filtered to leave 12 aircraft designs, five aircraft designs and so on, the reduction may be from thousands to hundreds, hundreds to tens and the like.

Next (step 109), the generated set of aircraft designs 300 is filtered using the physical constraints provided by the user. For each generated .vps3 file, a three-dimensional model of the aircraft is generated using the vehicle modelling application 3, i.e. OpenVSP^{™}. It is then determined whether the three-dimensional model satisfies each physical constraint, so for example if the exposed area of a wing of the aircraft is less than a required area. If any of the physical constraints are not satisfied, the aircraft design is removed from the set of aircraft designs. In this way, the number of aircraft designs may be substantially reduced.

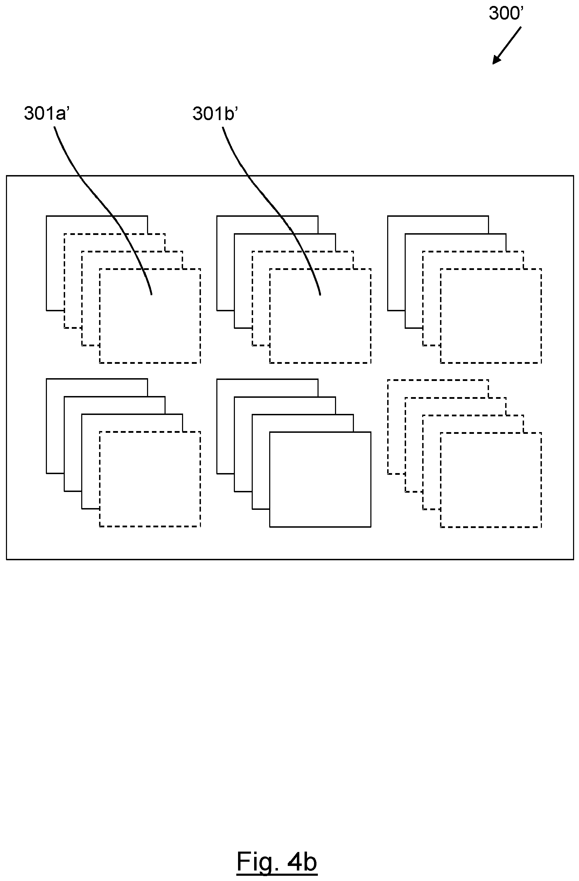

The filtered set of aircraft designs 300' is shown schematically in Figure 4b, with the aircraft designs that have removed from the generated set of aircraft designs 300 indicated with a dashed border, leading to reduced subsets 301a', 301b' and so on of aircraft designs.

While this step is described as happening subsequent to the set of aircraft designs being generated, in practice it can be done in parallel with the generation of the generated set of aircraft designs 300. For example after each .vps3 file is generated, its three-dimensional model is generated and checked to see if it satisfies the physical constraints, and only added to the set if it does; while in parallel, the other .vps3 files are being generated, checked and so on.

Further, the generated set of aircraft designs 300 may be filtered at this stage using the other types of constraints provided by the user. The key consideration is that at this stage the number of aircraft designs to be considered may be very large. As a consequence, only constraints that do not require too much processing power to be determined from the three-dimensional model of the aircraft (or the underlying .vps3 model, if appropriate) should be used, so that the step of filtering the aircraft designs does not take an excessive amount of time.

Next (step 111), the filtered set of aircraft designs 300' is further filtered by the user 4. The user can choose to display one or more of the aircraft designs, i.e. the three-dimensional models generated by the vehicle modelling application 3 from the corresponding .vps3 files. The user 4 may then decide to remove an aircraft design, or a subset of aircraft designs, for example all aircraft designs for which the trailing edge sweep angle of the wing planform 200 is 10°. This may be done based on judgements as to the physical, aerodynamic or other properties of the aircraft design determined by the user 4, or aesthetic judgements for example (e.g. if the aircraft design looks attractive). In this way, again the number of aircraft designs may be substantially reduced.

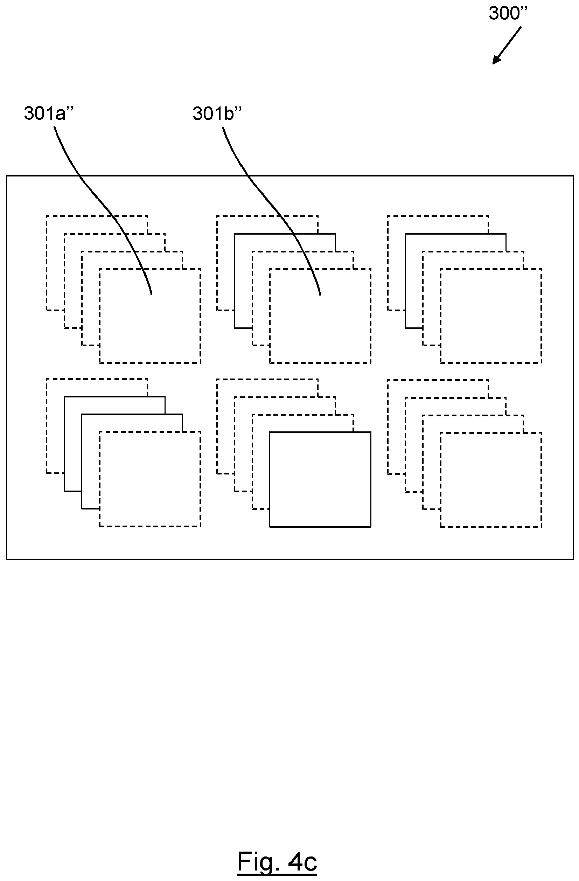

The further filtered set of aircraft designs 300" is shown schematically in Figure 4c, with the aircraft designs that have removed from the generated set of aircraft designs 300 or the filtered set of aircraft designs 300' again indicated with a dashed border. As can be seen, this has again led to reduced subsets 301a", 301b" and so on of aircraft designs, with the subset 301a" now for example being entirely empty.

Next (step 113), the user 4 provides one or more aerodynamic constraints for the aircraft. The aerodynamic constraints are aerodynamic properties that the designed aircraft must satisfy. For example, an aerodynamic constraint may be the maximum lift to drag ratio for the aircraft, which is indicative of how long the aircraft can stay in air for a given weight and fuel. Another aerodynamic constraint may be that a measure of the likely stability of the aircraft in flight is less than a desired threshold.

Next (step 115), the further filtered set of aircraft designs 300" is filtered using the aerodynamic constraints provided by the user. As before, for each .vps3 file, a three-dimensional model of the aircraft is generated (or obtained if previously generated and still available), and it is then determined if the aircraft of the aircraft design satisfies each aerodynamic constraint. However, in this case the number of aircraft designs to be considered should be reduced considerably, and so aerodynamic constraints, which can require much more processing power to be determined, can be used. Similarly to above, the generated set of aircraft designs may be filtered at this stage using the other types of constraints provided by the user. For example, a constraint may be based on how well the aircraft will in practice "sit", which cannot easily be determined from a simple three-dimensional model. Again, at this stage constraints that require much more processing power to be determined can be used.

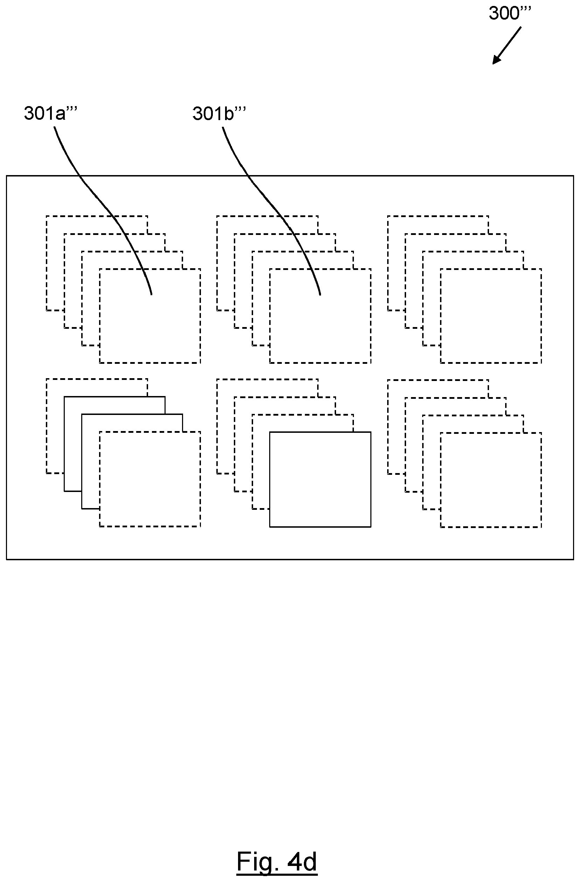

The (still) further filtered set of aircraft designs 300‴ is shown schematically in Figure 4d. As can be seen, now only three aircraft designs remain.

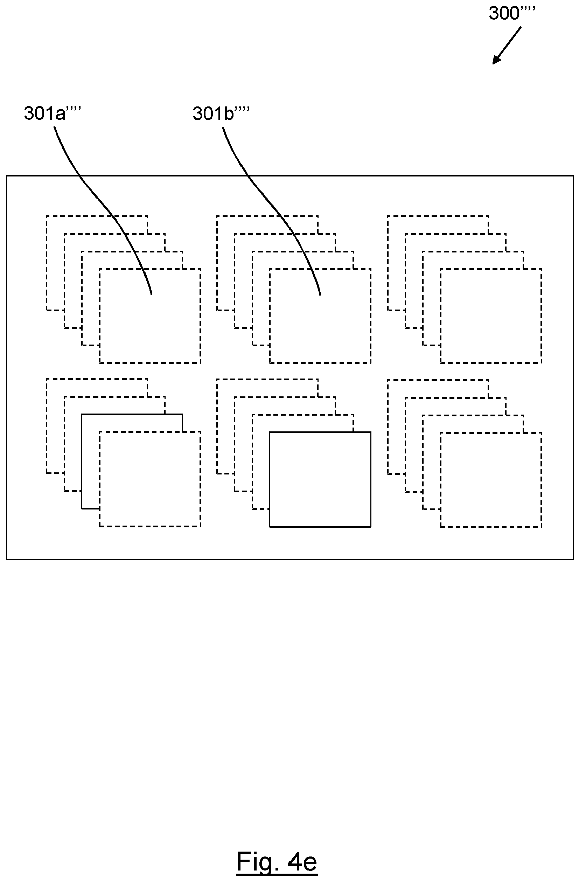

Next (step 117), the further filtered set of aircraft designs 300‴ is again filtered by the user 4, so that the user 4 can remove any further aircraft designs, or subsets of aircraft designs, that they do not consider desirable. This leads to the further filtered set of aircraft designs 300"" shown in Figure 4e, in which only two aircraft designs remain.

The remaining aircraft designs can be output (step 119), for example as .vps3 files, CAD files generated from those .vps3 files, or in any other desired manner.

It will be appreciated that steps of the method may be repeated in an iterative manner when filtering the aircraft designs to reduce their number. For example, further physical constraints and/or aerodynamic constraints may be added by the user at later stages of the process. In particular, the later in the process, when there are fewer aircraft designs remaining, the more processor-intensive analyses can viably be used.

In addition, the possible values of parameters of variable components may be modified, in order to generate new possible aircraft designs once the original generated set of aircraft designs 300 has been suitably reduced in number by filtering.

Generally, it will be appreciated that there will be considerable flexibility in how the possible aircraft designs may be generated and filtered while remaining in accordance with the invention, and in which order the steps of a method in accordance with the invention is performed, and that the present invention lends itself to many different variations not specifically illustrated herein.

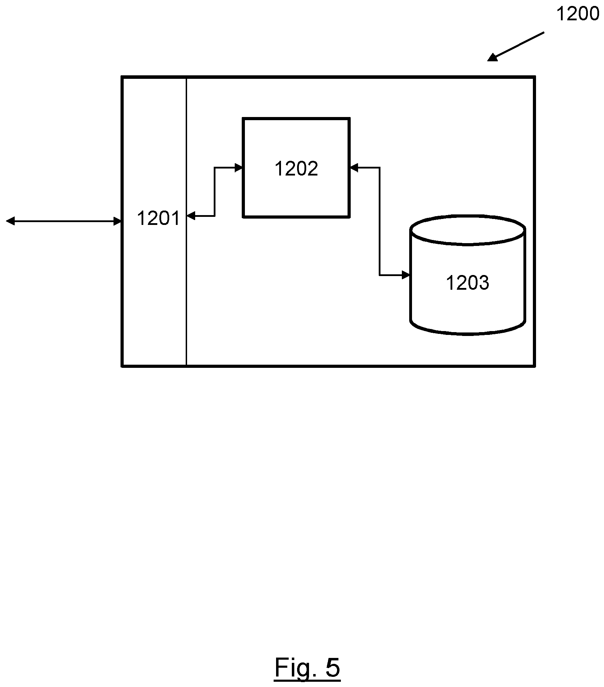

Embodiments of the disclosure include the system described above provided on a computing device, and the methods described above performed on a computing device, such as the computing device 1200 shown in Figure 5. The computing device 1200 comprises a data interface 1201, through which data can be sent or received, for example over a network, from a user input device such as a keyboard, or on a user output device such as a screen. The computing device 1200 further comprises a processor 1202 in communication with the data interface 1201, and memory 1203 in communication with the processor 1202. In this way, the computing device 1200 can receive data via the data interface 1201, and the processor 1202 can store the received data in the memory 1203, and process it so as to provide the system and/or perform the methods described herein.

Each device, module, component, machine or function as described in relation to any of the examples described herein may comprise a processor and/or processing system or may be comprised in apparatus comprising a processor and/or processing system. One or more aspects of the embodiments described herein comprise processes performed by apparatus. In some examples, the apparatus comprises one or more processing systems or processors configured to carry out these processes. In this regard, embodiments may be implemented at least in part by computer software stored in (non-transitory) memory and executable by the processor, or by hardware, or by a combination of tangibly stored software and hardware (and tangibly stored firmware). Embodiments also extend to computer programs, particularly computer programs on or in a carrier, adapted for putting the above described embodiments into practice. The program may be in the form of non-transitory source code, object code, or in any other non-transitory form suitable for use in the implementation of processes according to embodiments. The carrier may be any entity or device capable of carrying the program, such as a RAM, a ROM, or an optical memory device, etc.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A computer-implemented method of generating one or more designs for a vehicle, using a vehicle modelling application (3) arranged to generate a three-dimensional model of a vehicle from a vehicle model definition, the vehicle model definition defining a set of values for geometric properties of the vehicle, the method comprising the steps of:
receiving (101, 103) a set of geometric constraints, each geometric constraint defining a set of permissible values for a geometric property of the vehicle;
receiving (105) a first set of physical constraints for the vehicle, each physical constraint defining a set of permissible values for a physical property of the vehicle;
generating (107) a set of vehicle model definitions (300), wherein each vehicle model definition of the set of vehicle model definitions (300) satisfies each geometric constraint of the set of geometric constraints;
filtering (109) the set of vehicle model definitions (300) using the first set of physical constraints by:
for one or more vehicle model definitions of the set of vehicle model definitions (300), generating a three-dimensional model of the vehicle from the vehicle model definition using the vehicle modelling application (3);
determining whether the three-dimensional model satisfies each physical constraint of the first set of physical constraints;
if the three-dimensional model does not satisfy each physical constraint of the first set of physical constraints, removing the vehicle model definition from the set of vehicle model definitions (300); and
outputting (119) the filtered set of vehicle model definitions (300').

2. The method according to claim 1, wherein the geometric property of a geometric constraint of the set of geometric constraints includes the angle of a part of the vehicle.

3. The method according to claim 1 or claim 2, wherein the geometric property of a geometric constraint of the set of geometric constraints includes the length of a part of the vehicle.

4. The method according to any one of the preceding claims, wherein the physical property of a physical constraint of the first set of physical constraints includes the area of a part of the vehicle body.

5. The method according to any one of the preceding claims, wherein the generated set of vehicle model definitions (300) consists of all vehicle model definitions that satisfy each geometric constraint of the set of geometric constraints.

6. The method according to any one of the preceding claims, wherein the vehicle modelling application (3) is OpenVSP.

7. The method according to any one of the preceding claims, further comprising the steps of:
subsequent to filtering (109) the set of vehicle model definitions (300) using the first set of physical constraints, filtering (111) the set of vehicle model definitions (300') using user input by:
for one or more vehicle model definitions of the set of vehicle model definitions (300'), displaying the three-dimensional model of the vehicle of the vehicle model definition to a user;
in response to a request from the user, removing the vehicle model definition from the set of vehicle model definitions (300').

8. The method according to any one of the preceding claims, further comprising the steps of:
receiving (113) a second set of physical constraints for the vehicle, each physical constraint defining a set of permissible values for physical property of the vehicle;
subsequent to filtering (109) the set of vehicle model definitions (300) using the first set of physical constraints, filtering (115) the set of vehicle model definitions (300', 300") using the second set of physical constraints by:
for one or more vehicle model definitions of the set of vehicle model definitions (300', 300"), determining whether the three-dimensional model of the vehicle of the vehicle model definition satisfies each physical constraint of the second set of physical constraints;
if the three-dimensional model does not satisfy each physical constraint of the second set of physical constraints, removing the vehicle model definition from the set of vehicle model definitions (300', 300").

9. The method according to claim 8, further comprising the steps of:
subsequent to filtering (115) the set of vehicle model definitions (300', 300") using the second set of physical constraints, filtering (117) the set of vehicle model definitions (300‴) using further user input by:
for one or more vehicle model definitions of the set of vehicle model definitions (300‴), displaying the three-dimensional model of the vehicle of the vehicle model definition to a user;
in response to a request from the user, removing the vehicle model definition from the set of vehicle model definitions (300‴).

10. The method according to claim 8 or claim 9, wherein the second set of physical constraints comprises aerodynamic constraints, each aerodynamic constraint defining a set of permissible values for an aerodynamic property of the vehicle.

11. The method according to any one of claims 8 to 10, wherein the first set of physical constraints does not include any aerodynamic constraints.

12. The method according to any one of claims 8 to 11, wherein each physical constraint of the second set of physical constraints requires greater processing power than each physical constraint of the first set of physical constraints.

13. The method according to any one of the preceding claims, wherein the vehicle is an aircraft.

14. The method according to any one of the preceding claims, further comprising the step of manufacturing a vehicle in accordance with a vehicle model definition of the set of vehicle model definitions.

15. A computer program product comprising instructions which, when executed on a computing device (1200) comprising a processor (1202) and memory (1203), cause the processor to carry out a method according to any one of claims 1 to 13.
